# FASCICULE DE BREVET EUROPEEN

(11) **EP 1 581 044 B1**
(45) Date de publication et mention de la délivrance du brevet: **05.11.2008**
(21) Numéro de dépôt: 03799683.2
(22) Date de dépôt: 22.12.2003
(51) Int. Cl.: A01K 15/02

(54) **OBJET A MACHER COMESTIBLE POUR ANIMAUX CARNIVORES DE COMPAGNIE ET METHODE POUR ASSURER L HYGIENE DE LA CAVITE BUCCALE DE CES ANIMAUX AVEC UN TEL OBJET**
ESSBARER KAUGEGENSTAND FÜR FLEISCHFRESSENDE HAUSTIERE UND VERFAHREN ZUM SICHERN DER MUNDRAUMHYGIENE VON DIESEN TIEREN MIT EINEM SOLCHEN GEGENSTAND
EDIBLE, CHEWABLE OBJECT FOR CARNIVOROUS PETS AND METHOD OF CONTROLLING THE HYGIENE OF THE ORAL CAVITY OF SAID ANIMALS, USING ONE SUCH OBJECT

(30) Priorité: 30.12.2002 FR 0216838
(43) Date de publication de la demande: 05.10.2005
(73) Titulaire: VIRBAC, 06516 Carros (FR)
(72) Inventeur: DERRIEU, Guy, F-06800 CAGNES SUR MER (FR); DELHOM, Nathalie, F-06140 VENCE (FR)
(74) Mandataire: Bolinches, Michel Jean-Marie
(86) Numéro de dépôt international: PCT/FR2003/003859
(87) Numéro de publication internationale: WO 2004/062358

(56) Documents cités:
- GB-A- 2 359 746
- US-A- 5 947 061
- US-A- 6 148 771
- US-B1- 6 228 402
- US-B1- 6 360 696

## Description

L'invention concerne un objet à mâcher comestible pour animaux carnivores de compagnie, ainsi qu'une méthode pour assurer l'hygiène de la cavité buccale et des dents de ces animaux avec un tel objet.

Comme les êtres humains, les animaux de compagnie carnivores domestiques tels que les chiens et les chats, sont sujets à des problèmes bucco-dentaires. Ces problèmes peuvent amener diverses affections dans la cavité buccale, au niveau des gencives, au niveau des dents, comme par exemple la formation de plaques bactériennes invisibles qui se forment à la surface des dents. L'hygiène bucco-dentaire des chiens ou autres carnivores domestiques analogues est souvent déficiente en raison de l'impossibilité de réaliser un brossage efficace de leurs dents avec des produits dentifrices adaptés, de façon comparable à l'usage qui en est fait chez l'homme.

La dentition du chien comprend 42 dents. Il y a 4 différents types de dents, les incisives, les canines (crocs), les prémolaires et les molaires. Les incisives sont principalement utilisées pour prendre la nourriture et pour faire la toilette (mordiller la peau). Les canines (crocs) sont principalement utilisées pour la défense et l'attaque, et pour déchirer les morceaux de chair à manger. Les prémolaires sont principalement utilisées pour cisailler la nourriture en plus petits morceaux. Les molaires sont principalement utilisées pour broyer et mâcher la nourriture dans le but d'obtenir des petits morceaux qui pourront être avalés.

Quand un chien mâche un objet ou de la nourriture, cette action implique principalement les dents postérieures. Plus spécifiquement, les dents utilisées dans cette action sont les dents carnassières constituées des quatre prémolaires supérieures et de la première molaire inférieure.

La plaque dentaire est composée de débris alimentaires et de bactéries. Elle apparaît à la jonction de la gencive et de la dent sous forme d'une pellicule jaunâtre. Une nourriture riche en sucre, une mauvaise position des dents, l'inflammation des gencives et l'absence de mastication favorise son apparition. A partir de 2-3 ans, la minéralisation de cette plaque entraîne un dépôt de tartre. Ce dernier donne une mauvaise haleine, favorise les maladies des gencives et le déchaussement des dents. Les maladies des gencives sont douloureuses et peuvent contribuer à des maladies du coeur, du foie et des reins. Les gingivites, ou inflammation de la gencive marginale, sont des lésions confinées aux tissus du rebord gingival. Elles se traduisent par une rougeur de la gencive, un saignement, un oedème localisé, une sensibilité gingivale. Elles sont dues, pour l'essentiel, à des substances dérivées de la plaque microbienne qui s'accumule près du sulcus gingival. Des gingivites expérimentales peuvent être provoquées par l'abstention de mesures d'hygiène. Expérimentalement, la désinfection journalière méthodique des collets dentaires du chien maintient un degré d'inflammation gingival bas. Les signes cliniques d'inflammation gingivale augmenteront dès la cessation de la désinfection locale. Il existe une corrélation directe entre l'accumulation de plaque et le développement d'une gingivite. Celle-ci est réversible. Une gingivite mettra d'autant plus de temps à régresser qu'elle sera apparue rapidement. Une faible quantité de plaque bactérienne composée principalement de coques et de bâtonnets Gram+ est toujours présente lorsque la gencive est cliniquement saine. Si on permet à la plaque de s'accumuler, sa composition change. Rapidement, des bactéries Gram- et des bactéries fusiformes et filamenteuses commencent à apparaître. Ensuite apparaissent spirilles et spirochètes. Ces micro-organismes disparaîtront les premiers dès la reprise des mesures d'hygiène. La réaction inflammatoire observée dans le tissu conjonctif sous-jacent à l'épithélium de jonction est liée à la perméabilité de cet épithélium aux produits bactériens. D'autres facteurs locaux ou systémiques favorisent l'accumulation de plaque ou sa rétention, ou augmentent la susceptibilité du tissu gingival à l'attaque microbienne Des lésions peuvent être d'origine nutritionnelle, induites par exemple par des maladies endocrines, associées à des infections généralisées, ou induites par des agents médicamenteux. On classe aussi les gingivites en lésions d'origine locale ou liées à des facteurs systémiques. L'absence apparente de cause est désignée comme étant idiopathique. Ces lésions peuvent rester stables pendant des périodes indéfinies, se chiffrant en mois ou en années. Elles peuvent être réversibles ou progresser au cours d'épisodes inflammatoires aigus. Dans les lésions chroniques, on trouve différentes espèces bactériennes telles que Fusobactérium, Villonella, Campylobacter et Prevotella intermedia. Un certain nombre de lésions de type gingivite peuvent évoluer et devenir des parodontites. Les parodontites sont des lésions du parodonte profond, d'étiologie infectieuse, à manifestations inflammatoires qui entraînent la destruction des tissus de soutien de la dent: l'os alvéolaire et les fibres assurant l'ancrage de la racine à la gencive et à l'os. Les parodontites sont des maladies multifactorielles dues à la conjonction de bactéries, d'une part, et d'une réponse inflammatoire intense, d'autre part. Les bactéries responsables sont à l'origine des destructions tissulaires aiguës ou chroniques que l'on peut observer. L'environnement spécifique et les facteurs génétiques déterminent la susceptibilité du sujet à développer une flore bactérienne pathogène, une infection et une réponse inflammatoire destructrice.

A cause d'une part de la forme et de l'arrangement des dents postérieures et d'autre part de l'ouverture des zygomatiques et des conduits salivaires parotidiens juste au-dessus des dents postérieures supérieures, la plaque dentaire ainsi que le tartre et les calculs s'accumulent préférentiellement sur les dents postérieures, et plus particulièrement sur les dents postérieures supérieures. Plus spécifiquement, le tartre s'accumule sur les surfaces latérales des dents postérieures : la troisième et quatrième prémolaire supérieure, la première molaire supérieure, la quatrième prémolaire inférieure, et la première molaire inférieure.

Le chat, quant à lui, possède 30 dents définitives. Les dents sont classées selon leur fonction :
- les incisives : pour couper, ronger et pour effectuer des travaux délicats ;
- les canines : pour tenir, attraper et déchirer ;
- les prémolaires : pour couper, tenir et déchirer ; et
- les molaires : pour broyer.

Il a les dents de carnivores : 12 incisives, 4canines, 10 prémolaires et 4 molaires. Les carnassières sont les dents les plus broyeuses du chat : ce sont les 4^{ème} prémolaires supérieures et les molaires inférieures (la première prémolaire supérieure n'existe pas chez le chat).

Les animaux sauvages gardent leurs dents relativement propres car, lorsqu'ils dépècent une carcasse pour manger, il y a une abrasion considérable de leurs dents par la peau, la chair, les tendons, les os et le pelage de la proie. Aujourd'hui, les carnivores domestiques ont de la nourriture en boîte qui est gluante et ne permet pas de nettoyer les dents. La nourriture sèche ou les biscuits peuvent aider au nettoyage des dents, mais ils ne sont pas très efficaces.

Evolution des pathologies buccales : le premier stade est le dépôt de la plaque qui passe souvent inaperçue. Suite à une prolifération de bactéries, une gingivite, inflammation de la gencive, se développe, puis il y a formation du tartre grâce aux sels minéraux contenus dans la salive, principalement le carbonate de calcium, qui vont être fixés par les bactéries. Les processus d'inflammation augmentent, les bactéries anaérobies prolifèrent, les globules blancs arrivent en masse et provoquent les poches de pus entre la dent et la gencive. La gencive se décolle, il y a déchaussement, et également de la mauvaise haleine. Quant aux caries, fréquentes chez l'humain, elles n'existent quasiment pas chez les carnivores domestiques.

Les vétérinaires ont longtemps recommandé aux propriétaires de brosser les dents de leur animal de compagnie régulièrement afin de réduire le tartre qui se forme et de prévenir ou retarder l'apparition de maladies et la possible perte des dents. Plusieurs dispositifs ont été mis au point pour tenter d'éliminer la plaque et le tartre qui ont tendance à s'accumuler sur les dents des animaux. Ces dispositifs comprennent diverses configurations de brosses qui exigent que le propriétaire de l'animal de compagnie nettoie les dents de celui-ci après chaque repas.

A titre d'information, les documents US-4,738,001, US-5,273,425, et US-5,944,516 décrivent des exemples de dispositifs spécialement adaptés pour brosser les dents d'un animal de compagnie. Alors qu'un tel nettoyage peut s'avérer efficace, il est plutôt fastidieux, car l'animal de compagnie n'est pas toujours coopératif et par conséquent une telle opération n'est pas poursuivie pendant très longtemps. Des inconvénients similaires sont rencontrés avec les divers dispositifs de raclage et massage de l'art antérieur.

Une autre solution consiste à donner à l'animal de compagnie un dispositif à mâcher sous la forme d'un jouet non comestible pour lui garder les dents propres. Des exemples de ce dispositif sont décrits dans les documents US-4,513,014; US-4,802,444; FR-2 696 074; US-5,647,302; US-6,148,771 et US-6,305,326. Un tel dispositif est généralement destiné à supporter un mâchage important et répété sans détérioration tandis que les surfaces du jouet à mâcher servent à éliminer par raclage ou frottement la plaque et le tartre accumulés. En jouant avec le dispositif, l'animal nettoie ses dents. Les inconvénients de ces dispositifs sont propres à leur efficacité limitée. Leurs configurations et leurs formes particulières empêchent souvent un contact correct avec les surfaces des dents et/ou n'ont souvent qu'une aptitude limitée à l'élimination des dépôts indésirables lorsque le contact a lieu. Leur action est d'autant plus limitée que ces dispositifs ne détruisent pas la flore bactérienne présente. Par ailleurs, s'agissant d'un jouet, l'animal peut en fonction de son humeur le délaisser pendant de longues périodes, voire le perdre (ce qui ne sera pas nécessairement détecté par le propriétaire), ce qui ne répond pas à l'exigence de régularité dans l'entretien de la cavité buccale. Enfin, le jouet d'un animal de compagnies pouvant être abandonné par l'animal en n'importe quel endroit, et récupéré par un enfant par exemple, il peut être dangereux qu'il contienne des agents actifs comme des substances médicamenteuses.

Une dernière solution consiste à donner à l'animal de compagnie un objet à mâcher comestible dont les composants sont suffisamment durs et abrasifs pour que les surfaces des dents soient nettoyées par frottement tandis que le matériau à mâcher se fragmente durant la mastication. Des difficultés apparaissent dans le choix d'un matériau à la fois comestible et suffisamment dur et abrasif. De tels objets à mâcher doivent pouvoir résister à des manipulations et des forces considérables avant de se fragmenter de telle sorte qu'une portion importante des surfaces des dents de l'animal de compagnie ait été contactée avant que le matériau ne soit avalé.

De tels objets à mâcher sont notamment décrits dans les documents suivants :
- le document EP-0 552 897 décrit un objet comestible solide constitué de 30 à 60 % en poids de matière sèche d'une matrice d'amidon cellulaire flexible masticable dans laquelle sont incorporés 20 à 50 % en poids d'un matériau fibreux cellulosique ;
- le document US-5,407,661 décrit un objet à mâcher pour animaux de compagnie, comestible, solide, extrudé non cuit ayant une matrice cellulaire inerte et flexible contenant du matériel fibreux cellulosique, permettant de réduire le tartre, les tâches et les plaques sur les dents des chiens ;
- le document US-5,419,283 décrit un objet à mâcher comestible pour animaux composé d'amidon et de copolymère d'éthylène biodégradable ;
- le document US-5,431,927 décrit un produit alimentaire pour animaux, solide, extrudé ayant une structure et une composition particulière (protéines, graisses, carbohydrates, fibres et vitamines), le document US-5,500,239 décrivant par ailleurs le procédé pour sa fabrication ;
- le document US-6,379,725 décrit un objet à mâcher comestible pour animaux domestiques réalisé à partir de protéines animales et végétales ;
- le document FR-2 747 570 décrit une composition anti-tartre masticable se présentant sous la forme d'un os ;
- les documents US-6,126,978 et US-6,274,182 décrivent respectivement un procédé de fabrication d'un objet à mâcher de lamelle comestible ayant une dureté variable selon le souhait du propriétaire et une lamelle pour animaux biodégradable constituée de polyestéramide et d'amidon ;
- les documents IE-970930, IE-970931, IE-970932, et GB-2 332 850 décrivent un procédé d'obtention par extrusion-moulage d'un objet comestible facilement digestible, nutritionnel, et stable pour garder sa forme ; et
- certains documents comme FR-2 607 704, EP-0 272 968, US-6,365,133 ou US-5,336,494, décrivent des objets naturels comestibles imprégnés ou enrobés avec différents actifs principalement antibactériens et anti-tartre ;
- enfin, le document US-6,228,704 décrit un objet à mâcher présentant la forme d'un os, sans aucune arête, qui comporte du xylitol dans une proportion comprise entre 0,25% et 2,5% en poids, pour empêcher l'apparition de caries dans les dents de l'animal.

Dans la plupart des objets comestibles à mâcher selon cet art antérieur, la caractéristique principale de chaque invention se retrouve dans les différentes compositions, et les formes données sont plus souvent des formes attractives ou décoratives qui imitent pour la plupart la forme d'un os.

Il est donc souhaitable de disposer d'objets à mâcher comestibles et digestibles qui permettent, lors de leur mâchonnement par l'animal, d'allier aussi bien les avantages des os ou lamelles à mâcher comestibles que des jouets à mâcher décrits précédemment, mais de pallier leurs inconvénients et leurs défauts c'est à dire d'être particulièrement efficaces pour atteindre toutes les parties de la cavité buccale, en particulier les interstices entre les dents pour nettoyer et traiter cette cavité buccale, pour nettoyer la totalité de la surface des dents en éliminant la plaque et le tartre des dents et prévenir la réapparition de ces différents facteurs néfastes pour l'hygiène buccale et dentaire des animaux domestiques, en particulier le chien et le chat.

A cet effet, l'invention propose un objet à mâcher comestible pour animaux carnivores de compagnie, cet objet étant de forme allongée et constitué d'une matrice masticable, comestible et digestive, et étant caractérisé en ce que la forme de l'objet présente au moins deux dièdres dont les arêtes s'étendent sensiblement sur toute la longueur de l'objet.

D'une manière générale, en section droite, l'objet présente une forme polygonale avec n angles saillants pour former n arêtes.

D'une manière générale, les arêtes aₙ des dièdres dₙ sont sensiblement rectilignes, concaves ou convexes, et elles peuvent être légèrement arrondies pour éviter de blesser l'animal.

Selon une autre caractéristique de l'invention, les dièdres forment un angle compris entre 0,5° et 70°, préférentiellement entre 10° et 50°.

Selon un exemple de réalisation, l'objet à mâcher présente globalement une forme de diabolo avec une partie centrale et deux parties d'extrémité présentant chacune, en section droite, au moins deux angles saillants pour former deux arêtes.

Selon un autre exemple de réalisation, l'objet à mâcher, en section droite, présente une forme globalement en S avec une partie centrale et deux parties d'extrémité faisant respectivement saillie de part et d'autre de la partie centrale, chaque partie d'extrémité présentant, en section droite, au moins deux angles saillants pour former deux arêtes.

Selon un autre exemple de réalisation, l'objet à mâcher, en section droite, présente globalement une forme en V définie par deux dièdres pour former trois arêtes.

Selon un autre exemple de réalisation, l'objet à mâcher, en section droite, présente globalement une forme en W définie par au moins quatre dièdres pour former au moins cinq arêtes.

Enfin, selon encore un autre exemple de réalisation, l'objet à mâcher, en section droite, présente globalement une forme en losange avec deux angles saillants pour former deux arêtes.

Selon une autre caractéristique de l'invention, la composition de la matrice contient au moins un élément actif, agent chimique ou biologique possédant soit une activité thérapeutique, curative ou préventive, locale ou systémique, soit une activité anti-tartre, contre les caries, la plaque dentaire, les dépôts calcaires ou encore une activité renforçant la structure dentaire.

D'une manière générale, la composition de la matrice de l'objet à mâcher contient entre 0,01 et 25% en poids par rapport au poids total de l'objet à mâcher d'au moins un élément actif de telle sorte que la teneur en éléments d'actifs ne dépasse pas 25 % en poids de la composition totale de l'objet à mâcher.

D'une manière préférée, la teneur en éléments d'actifs dans la composition de la matrice ne dépassent pas 10 % en poids, la composition de la matrice peut contenir de 2 à 5 éléments actifs, et la teneur de chaque élément actif dans la composition de la matrice est comprise entre 0,01 et 5 % en poids de la matrice.

Selon un exemple de réalisation, le ou les éléments actifs sont choisis parmi les sels fluorés comme le fluorure de sodium, le monofluorate de sodium, le fluorure d'étain, seul ou en mélange, les pyrophosphate inorganiques de métaux alcalins mono ou divalent (Na, K, Li, Ca, Mg, etc...) de formules Mₙ₊₂PₙO₃ₙ₊₁ où M est un métal monovalent ou M'ₙPₙO₃ₙ₊₁ où M' est un métal divalent comme le pyrophosphate tétrasodique, le pyrophosphate tétrapotassique, le pyrophosphate acide de sodium, le pyrophosphate de calcium, les antimicrobiens et /ou antifongiques et/ou antiseptiques comme la chlorhexidine ou ses sels, le bromochlorophène, le triclosan, le chlorure de benzalkonium, le chlorobutanol, le chlorure de cétylpyridinium, les sels de l'acide benzoïque comme le benzoate de sodium, le digluconate de zinc, le thiocyanate de potassium, la vitamine C et ses sels en particulier l'ascorbate de zinc, l'acide citrique et ses sels, les oxydoréductases comme la glucose oxydase, la galacto oxydase, la lactoperoxydase, le glycollate oxydase, la lactate oxydase, L-gluconolactone oxydase, L-2hydroxyacide oxydase, aldéhyde oxydase, xanthine oxydase, D-aspartate oxydase, L-amino acide oxydase, D-amino acide oxydase, monoamine oxydase, pyridoxaminephosphate oxydase, diamine oxydase, sulfite oxydase, à chacune de ces oxydoréductases peut être associée un substrat spécifique comme le glucose pour la glucose oxydase, comme substrats le D-glucose, D-galactose, L-sorbose, éthanol, tyramine, 1,4-diaminobutane, 6-hydroxy-L-nicotine, 6-hydroxy-D-nicotine, 2-aminophénol, glycollate, L-lactate, 2-deoxy-D-Glucose, L-gluconolactone, L-galactolactone, D-mannonolactone, L-2hydroxyisocaproate, acétaldéhyde, butyraldéhyde, xanthine, D-aspartate, D-glutamate, L-aminoacides et D-aminoacides, des enzymes comme la lysozyme, la lactoferrine, les reminéralisants, les substances de blanchiment des dents comme le TC45/Bioglass^{®}, les polysaccharides naturels ou modifiés comme la chitine, le chitosan et ses dérivés.

Par ailleurs, la composition de la matrice contient au moins un agent abrasif et, à titre d'exemple, l'agent abrasif est choisi parmi les dérivés de la silice comme la silice hydratée, silicate de zirconium, silicate d'aluminium, ou trisilicate de magnésium ; le carbonate de calcium ; le bicarbonate de sodium ; les dérivés du phosphate comme le dihydrogénophosphate de calcium (Ca(H₂PO₄)₂), le monohydrogénophosphate de calcium (CaHPO₄), le phosphate de magnésium-ammonium (MgNH₄PO₄) ou le pyrophosphate de calcium (Ca₂P₂O₇) ; une alumine comme le trihydrate d'alumine ; de la poudre de pierre ponce, des calcaires marins finement broyés, de la poudre d'os.

L'invention propose également une méthode pour assurer l'hygiène de la cavité buccale et des dents d'un animal carnivore de compagnie, au moyen d'un objet à mâcher comestible et digestible de forme allongée, méthode qui est caractérisée en ce qu'elle consiste :
- dans une première étape : à favoriser le contact entre l'objet et les dents de l'animal grâce à la présence d'arêtes qui s'étendent sensiblement sur toute la longueur de l'objet et à la présence de composants ou d'agents abrasifs contenus dans la matrice de l'objet, pour assurer un nettoyage mécanique des dents de l'animal aussi bien au niveau des surfaces que des interstices et/ou cavités ;
- dans une deuxième étape : à mettre en contact avec les dents nettoyées des éléments actifs contenus dans la matrice de l'objet ;
- dans une troisième étape : à provoquer en premier lieu après hydratation de l'objet par la salive de l'animal un ramollissement des arêtes de l'objet qui joue alors le rôle d'une raclette à bavette souple ; et
- dans une quatrième étape : par l'action conjointe du mâchonnement de l'objet qui provoque son fractionnement et de la présence d'une salive abondante, à libérer l'ensemble des éléments actifs pour les mettre en contact avec l'ensemble de la cavité buccale de l'animal.

Par ailleurs, la méthode selon l'invention consiste à adapter la dureté de la matrice de l'objet en fonction de l'animal considéré, à choisir une dureté telle que l'objet, en particulier ses arêtes, soit suffisamment dur pour ne pas s'écraser ou se fragmenter dès que l'animal commencera à mâcher l'objet d'une part, et à obtenir un ramollissement progressif des arêtes pour que l'effet abrasif sur les dents soit suffisant d'autre part, et à choisir une dureté telle que la désintégration de l'objet sous l'effet de la mastication et son assimilation par l'animal soient possibles.

Ainsi l'invention propose pour les objets à mâcher des formes spécifiques associées à des matrices contenant des agents abrasifs et des éléments actifs avec des duretés spécialement adaptées pour favoriser premièrement le contact entre les dispositifs et toutes les parties de la cavité buccale en particulier les dents pendant une période de temps nécessaire au nettoyage mécanique de ces dernières, aussi bien les surfaces que les interstices ou cavités, deuxièmement de disséminer des actifs lors de la rupture du dispositif, d'une part après hydratation par la salive, et d'autre part par le mâchonnement dans la totalité de la cavité buccale et plus particulièrement dans les interstices. En effet, la forme permet d'atteindre les endroits difficilement accessibles et d'y déposer les actifs lors de sa rupture par le mâchonnement. Ainsi les composants de la matrice tels que les agents d'abrasion et les substances actives sont amenés directement en contact avec les zones à traiter.

Concrètement, un objet à mâcher comestible et digestible selon l'invention permet d'avoir à la fois :
1) une action mécanique de nettoyage permettant d'atteindre toutes les parties de la cavité buccale et plus particulièrement les interstices grâce à :
   a) une forme particulièrement adaptée,
   b) la présence d'agents abrasifs dans la composition ; et
2) une activité thérapeutique, curative mais aussi préventive comme antimicrobienne, anti-tartre, contre la présence ou l'apparition de la plaque dentaire ou de la mauvaise haleine par la présence de composants ayant une activité contre les problèmes sanitaires et d'hygiène de la cavité buccale ou de la dentition, cette activité étant améliorée par le contact étroit qui s'établit entre l'objet à mâcher et les zones à traiter.

L'objet à mâcher peut être avantageusement utilisé pour la prévention et/ou le traitement des gingivites et/ou des parodontites des animaux domestiques, pour la prévention et/ou le traitement des dépôts de tartre dans la cavité buccale des animaux domestiques, et pour la lutte contre le développement de la plaque dentaire.

D'autres avantages, caractéristiques et détails de l'invention ressortiront du complément de description qui va suivre en référence aux dessins annexés, donnés uniquement à titre d'exemple et dans lesquels :
- les figures 1 à 13 sont des vues en perspective pour illustrer plusieurs formes de réalisation d'un objet à mâcher selon l'invention ; et
- la figure 14 est une vue en perspective simplifiée pour illustrer l'action d'un objet à mâcher de type de celui des figures 1 et 2 dans la gueule d'un animal domestique.

L'objet à mâcher selon l'invention est un objet de forme allongée qui est constitué d'une matrice masticable, comestible et digestive pour assurer les soins et l'hygiène de la cavité buccale et des dents des animaux de compagnie.

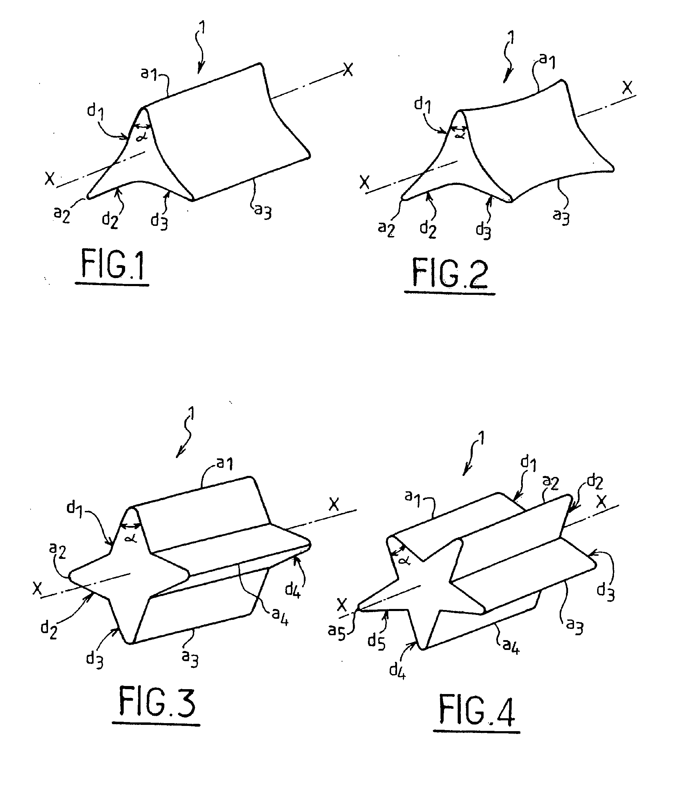

Une des caractéristiques principales de cet objet allongé réside dans sa forme qui présente au moins deux dièdres dont les deux arêtes s'étendent sensiblement sur toute la longueur de l'objet. Différentes formes possibles présentant au moins ces deux dièdres vont être décrites ci-après en référence aux figures 1 à 13.

Selon l'exemple illustré à la figure 1, l'objet 1 à mâcher s'étend suivant un axe longitudinal X-X et présente en section droite, dans un plan perpendiculaire à cet axe X-X, une forme globalement triangulaire avec trois angles saillants α et trois côtés qui sont de forme légèrement concave. Entre les deux extrémités de l'objet 1 à mâcher, cette forme en section droite définit trois dièdres d₁, d₂ et d₃ d'angle α et trois arêtes longitudinales a₁, a₂ et a₃, sensiblement rectilignes et parallèles à l'axe X-X. Selon une variante illustrée à la figure 2, les arêtes a₁, a₂ et a₃ sont légèrement concaves, sachant qu'elles pourraient être également de forme légèrement convexe.

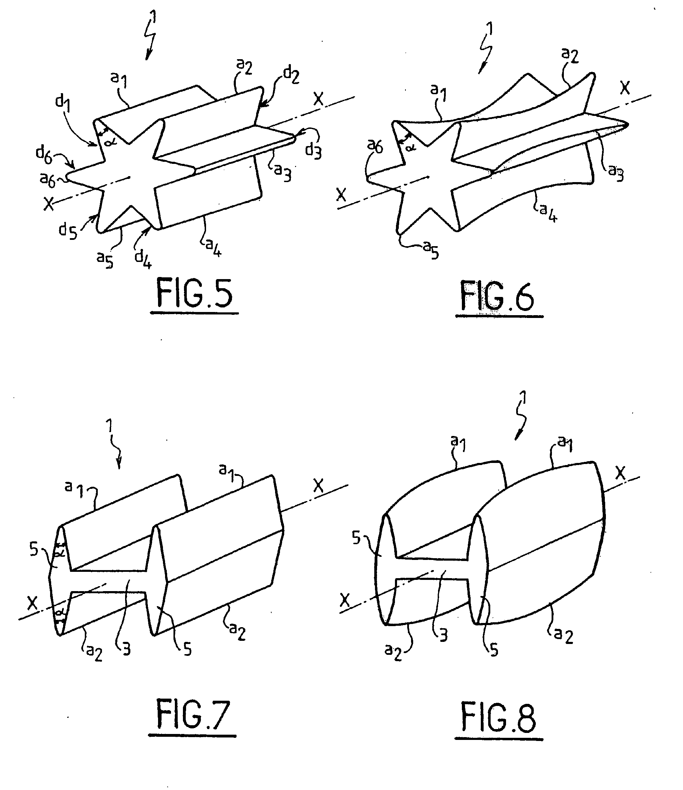

Selon l'exemple illustré à la figure 3, l'objet 1 à mâcher présente en section droite une forme polygonale avec quatre angles saillants α et huit côtés, qui définit quatre dièdres d₁, d₂, d₃ et d₄ d'angle α et quatre arêtes longitudinales a₁, a₂, a₃ et a₄ qui s'étendent entre les deux extrémités de l'objet 1 à mâcher. Ces arêtes a₁-a₄ peuvent être rectilignes ou légèrement concaves ou convexes. Selon deux variantes illustrées aux figures 4 et 5, les formes polygonales en section droite ont respectivement cinq et six angles saillants α avec respectivement cinq et six arêtes longitudinales a₁-a₅ et a₁-a₆. Ces arêtes peuvent être rectilignes, convexes ou concaves. La figure 6 est une variante de la figure 5 avec des arêtes a₁-a₆ de forme concave.

Selon l'exemple illustré à la figure 7, l'objet 1 à mâcher présente globalement une forme en "diabolo" avec une partie centrale 3 à section droite rectangulaire et deux parties d'extrémité 5 qui, en section droite, ont chacune une forme de losange avec deux angles saillants α et deux arêtes longitudinales a₁ et a₂ sensiblement rectilignes ou convexes selon la variante illustrée à la figure 8.

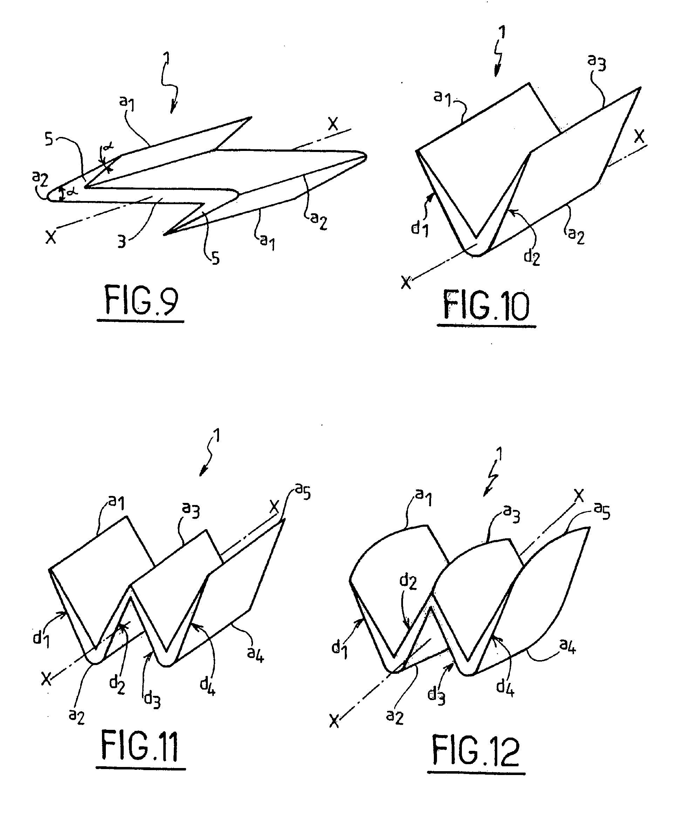

Selon l'exemple illustré à la figure 9, l'objet 1 à mâcher présente en section droite une forme globalement en S avec une partie centrale 3 rectangulaire et deux parties d'extrémité 5 qui font respectivement saillie de part et d'autre de la partie centrale 3, chaque partie d'extrémité 5 présentant, en section droite, au moins deux angles saillants α pour former au moins deux arêtes a₁ et a₂.

Selon l'exemple illustré à la figure 10, l'objet 1 à mâcher présente en section droite une forme en V avec deux dièdres d₁ et d₂ qui définissent trois arêtes longitudinales a₁, a₂ et a₃.

Selon l'exemple illustré à la figure 11, l'objet 1 à mâcher présente en section droite une forme en W avec quatre dièdres d1, d2, d3 et d4 qui définissent cinq arêtes longitudinales a₁ à a₅ sensiblement rectilignes ou de forme convexe par exemple selon la variante de la figure 12.

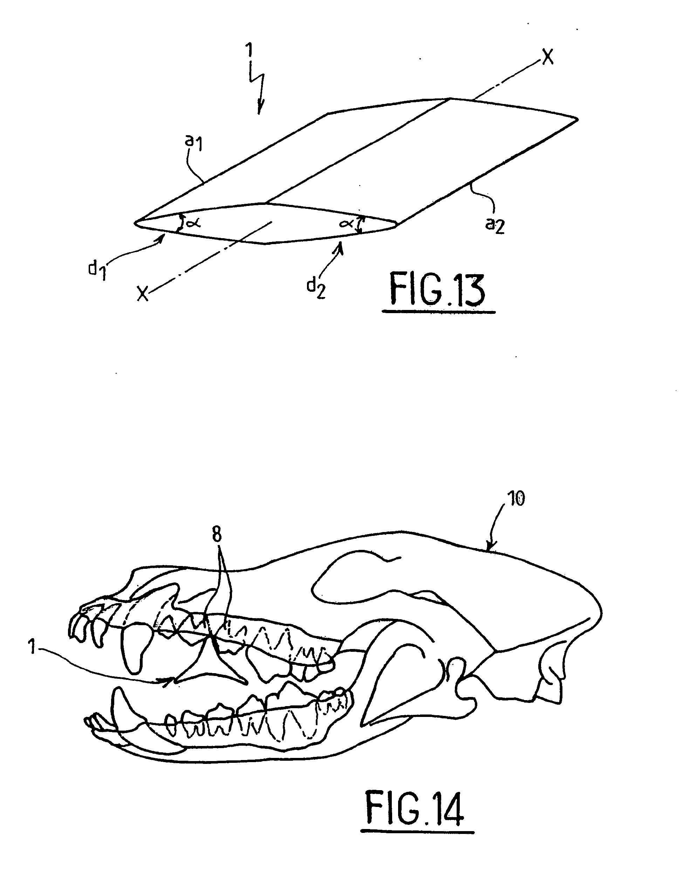

Selon l'exemple illustré à la figure 13, l'objet 1 à mâcher présente en section droite une forme en losange sur sensiblement toute sa longueur, qui est définie par deux dièdres d₁ et d₂ avec deux arêtes longitudinales a₁ et a₂.

Dans toutes les formes de réalisation décrites précédemment, les angles saillants α ou angles des dièdres peuvent être compris entre 0,5° et 70°, avantageusement entre 10° et 50°, et les arêtes de ces dièdres peuvent présenter un sommet légèrement arrondi pour éviter de blesser l'animal. Par ailleurs, les angles saillants α pour un même objet à mâcher ne sont pas nécessairement égaux, et les formes des objets à mâcher peuvent présenter un centre, un axe ou un plan de symétrie.

D'une manière générale, l'objet à mâcher peut présenter de deux à douze arêtes sur toute sa longueur et, préférentiellement de quatre à six arêtes. Quant à sa fabrication, on peut utiliser une technique d'extrusion, d'extrusion-moulage, et moulage, de calandrage et de découpage, ou de compression par exemple ;

L'objet à mâcher selon l'invention a montré qu'il peut être facilement saisi par l'animal, ce qui n'est pas le cas par exemple avec des lanières à mâcher décrites dans l'art antérieur et qui nécessitent souvent d'être données manuellement à l'animal.

Par ailleurs, en raison des différents types et tailles de mâchoires des animaux, dépendant des espèces et des races, les objets à mâcher selon l'invention seront de taille et de poids adaptés à la taille de l'animal auxquels ils sont destinés. Les objets à mâcher seront donc avantageusement dimensionnés proportionnellement à la taille de l'animal pour obtenir une meilleure efficacité et pour qu'ils soient suffisamment gros afin d'éviter que l'animal ne puisse pas les avaler, ni les mettre entièrement dans leurs gueules.

De façon inattendue, un tel objet à mâcher a montré agir séquentiellement au fur et à mesure qu'il est tourné dans la gueule de l'animal et mâché. Tout d'abord, il entre en contact avec toutes les parties de la cavité buccale et principalement des dents sous tous les angles et selon de nombreuses orientations. Les différents angles de l'objet selon l'invention déterminent des surfaces qui représentent une plus grande aire de contact par rapport à une forme cylindrique ou aux formes décrites dans l'art antérieur et les angles permettent à l'objet selon l'invention d'agir principalement entre les dents 8, comme cela est illustré sur la figure 14 qui montre une tête 10 d'un animal ayant dans la gueule un objet a mâcher du type de celui décrit à la figure 1. Ainsi l'abrasion et l'action des éléments actifs ont lieu dans de nombreux endroits souvent inaccessibles. Les sommets aigus formés par les angles et la présence de composants abrasifs ont pour effet d'éliminer la plaque et le tartre accumulés par raclage/abrasion des dents au fur et à mesure que l'animal mâche l'objet. Dans le même temps, les éléments actifs sont mis en contact direct avec les surfaces de dents ainsi nettoyées. Ensuite, l'afflux de salive produit lors du mâchonnement, qui ne réduit en rien l'action abrasive de l'objet, provoque le ramollissement en premier lieu des arêtes qui jouent alors un rôle de raclette à bavette souple, ce qui complète le contact avec toutes les surfaces, aspérités et interstices de la cavité buccale à la fois par les éléments abrasifs et par les éléments actifs. Enfin, par la rupture de la matrice et la présence abondante de salive, l'ensemble de la cavité buccale est en contact avec les composants actifs libérés. Grâce aux arêtes de l'objet selon l'invention qui permettent d'aller dans tous les interstices, une fois ramollies elles vont se désintégrer et libérer totalement les composants actifs qui pourront agir de façon locale, par contact ou par voie systémique.

La dureté de l'objet à mâcher selon l'invention est également un paramètre qui variera en fonction de l'animal qui le recevra. Elle devra être telle que l'objet à mâcher, et particulièrement ses arrêtes, soit suffisamment dur pour ne pas s'écraser ni se fragmenter dès que l'animal commencera à mâcher l'objet. Le ramollissement des arrête devra être progressif et intervenir après un laps de temps suffisamment long pour qu'elles aient pu exercer leur effet abrasif sur une grande surface des dents. Cependant, la dureté de l'objet à mâcher selon l'invention devra permettre à terme la fragmentation de l'objet et son assimilation par l'animal. Préférentiellement, l'objet selon l'invention devra se ramollir puis se désintégrer sous l'effet de la mastication au bout d'un temps compris entre 30 secondes à 30 min, encore plus préférentiellement au bout d'un temps compris entre 1 min et 10 min et encore plus préférentiellement au bout d'un temps compris entre 2 min et 6 min.

Selon la présente invention, la matrice peut être naturelle ou synthétique et sa composition peut être choisie parmi celles comestibles et digestibles décrites dans l'art antérieur cité en préambule. A titre d'exemples particuliers de matériaux susceptibles d'entrer dans la composition de la matrice, on peut citer la caséine, la farine de pois, l'amidon de mais, la farine de riz, et/ou les dérivés de cellulose. Par ailleurs, la composition de la matrice de l'objet à mâcher contient entre 0,01 et 25%, préférentiellement entre 1 et 10% en poids par rapport au poids total de l'objet à mâcher d'au moins un élément actif de telle sorte que la teneur en éléments d'actifs ne dépasse pas 25 % en poids de la composition totale de l'objet à mâcher, préférentiellement ne dépasse pas 10% en poids de la composition totale de l'objet à mâcher.

Par élément actif on entend n'importe quel composé chimique ou biologique possédant soit une activité thérapeutique, curative ou préventive, locale ou systémique, soit une activité anti-tartre, contre les caries, la plaque dentaire, les dépôts calcaires ou encore une activité renforçant la structure dentaire.

Selon un mode de réalisation avantageux de ladite composition de la matrice, les éléments actifs sont avantageusement choisis parmi les sels fluorés comme le fluorure de sodium, le monofluorate de sodium, le fluorure d'étain, seul ou en mélange; les pyrophosphate inorganiques de métaux alcalins mono ou divalent (Na, K, Li, Ca, Mg, etc...) de formules Mₙ₊₂PₙO₃ₙ₊₁ où M est un métal monovalent ou M'ₙPₙO₃ₙ₊₁ où M' est un métal divalent comme le pyrophosphate tétrasodique, le pyrophosphate tétrapotassique, le pyrophosphate acide de sodium, le pyrophosphate de calcium; les substances à activité antimicrobienne; les substances à activité antifongiques, les substances à activité antiseptiques comme la chlorhexidine ou ses sels, le bromochlorophène, le triclosan, le chlorure de benzalkonium, le chlorobutanol, le chlorure de cétylpyridinium; les sels de l'acide benzoïque comme le benzoate de sodium; le digluconate de zinc; le thiocyanate de potassium; la vitamine C et ses sels en particulier l'ascorbate de zinc; l'acide citrique et ses sels; les oxydoréductases comme la glucose oxydase, la galacto oxydase, la lactoperoxydase, la glycollate oxydase, la lactate oxydase, L-gluconolactone oxydase, L-2hydroxyacide oxydase, aldéhyde oxydase, xanthine oxydase, D-aspartate oxydase, L-amino acide oxydase, D-amino acide oxydase, monoamine oxydase, pyridoxaminephosphate oxydase, diamine oxydase, sulfite oxydase, à chacune de ces oxydoréductases pouvant être associé un substrat spécifique comme le glucose pour la glucose oxydase, comme substrats le D-glucose, D-galactose, L-sorbose, éthanol, tyramine, 1,4-diaminobutane, 6-hydroxy-L-nicotine, 6-hydroxy-D-nicotine, 2-aminophénol, glycollate, L-lactate, 2-deoxy-D-Glucose, L-gluconolactone, L-galactolactone, D-mannonolactone, L-2hydroxyisocaproate, acétaldéhyde, butyraldéhyde, xanthine, D-aspartate, D-glutamate, L-aminoacides et D-aminoacides; des enzymes comme la lysozyme, la lactoferrine; les reminéralisants, les substances de blanchiment des dents comme le TC45/Bioglass^{®}, les polysaccharides naturels ou modifiés comme la chitine, le chitosan et ses dérivés...

Selon un autre mode de réalisation avantageux de ladite composition de la matrice, l'action abrasive est due en partie à un ou des composés avantageusement choisi(s) parmi les dérivés de la silice comme la silice hydratée, le silicate de zirconium, le silicate d'aluminium ou le trisilicate de magnésium , le carbonate de calcium , le bicarbonate de sodium, les dérivés du phosphate comme le dihydrogénophosphate de calcium (Ca(H₂PO₄)₂), le monohydrogénophosphate de calcium (CaHPO₄), le phosphate de magnésium-ammonium (MgNH₄PO₄) ou le pyrophosphate de calcium (Ca₂P₂O₇), une alumine comme le trihydrate d'alumine ; de la poudre de pierre ponce, des calcaires marins finement broyés, de la poudre d'os.

Selon un autre mode de réalisation avantageux dudit objet à mâcher le ou les composant(s) actif(s) peut ou peuvent être introduit(s) par immersion de l'objet dans une solution contenant le ou les composant(s) actif(s) puis séchage si nécessaire ou par vaporisation de cette solution ou suspension si présence d'un ou plusieurs composant(s) actif(s) insoluble(s) ou par tout autre procédé connu de l'homme de l'Art permettant d'imprégner ou enduire l'objet d'un ou de composant(s) actif(s). Les quantités de composant(s) actif(s) sont ajustées de manière à ne présenter aucun risque pour l'animal, même pour une utilisation quotidienne maximale correspondant à une mastication maximale et à l'ingestion de l'objet.

Selon un autre mode de réalisation avantageux de ladite composition de la matrice, elle comprend en outre au moins l'un des composés suivants : un ou des arômes ou agents de saveur favorisant l'appétence et l'intérêt de l'animal pour l'objet à mâcher, un ou des agents humectants comme la glycérine ou le propylène glycol, un ou des agents de préservation comme l'acide benzoïque et ses sels, l'acide sorbique et ses sels, acide propionique et ses sels, les parabens et leurs sels, un ou des agents odorants pour masquer la mauvaise haleine tels que parfums composés synthétiques ou naturels de fleurs et/ou de fruits.

Une composition préférée de la matrice de l'objet à mâcher selon l'invention contient entre 2 et 5 composants actifs, chaque composant actif étant compris entre 0,01 et 5% en poids par rapport au poids total de l'objet à mâcher sans que la somme de ces derniers ne dépasse 10% en poids par rapport au poids total de l'objet à mâcher.

L'invention est aussi relative à une méthode pour soigner et assainir la cavité buccale d'un carnivore domestique consistant à fournir à celui-ci un objet à mâcher comestible permettant de lutter efficacement, aussi bien physiquement, principalement mécaniquement, que chimiquement ou biologiquement contre toutes les agressions de la cavité buccale ou de la dentition telles que la flore microbienne qui se développe dans la gueule des animaux, le tartre ou tous les autres dépôts calcaires ou non incrustés entre les dents.

### EXEMPLE 1

On prépare une matrice en mélangeant 30,5% de caséine, 24% de farine de pois, 6,5% de kaolin, 4,5% de levure de bière, 4,5% de d,l-méthionine, 4,5% de stéarate de magnésium, 3,5% de guar, 1% de thiocyanate de potassium, 1% de silicate de zirconium, 1,42 % de citrate de sodium, et 5,3% d'une solution aqueuse à 20% (pN) de digluconate de chlorhexidine en présence de 13,28% d'eau. Les objets à mâcher comestibles de forme conforme à la figure 5 selon l'invention sont obtenus par extrusion-moulage. Trois lots d'objets à mâcher comestibles de trois différents formats, dimensions et poids, adaptés à la taille du chien sont obtenus, à savoir :
- chien de petite taille : 8,5 cm de longueur, et pesant 25 g,
- chien de taille moyenne : 11,5 cm de longueur, et pesant 65 g, et
- chien de grande taille : 13,5 cm de longueur, et pesant 105 g.

### EXEMPLE 2

On prépare une matrice en mélangeant 37% d'amidon de maïs, 22% de farine de riz, 10% de glycérine, 8% de levure de bière, 7% de dérivés de cellulose, 5,3% d'une solution aqueuse à 20% (pN) de digluconate de chlorhexidine 4% de rafle de maïs, 2,28% d'une solution aqueuse à 70%(pN) de sorbitol, 1% de thiocyanate de potassium, 1% de silicate de zirconium, et 1,42% de citrate de sodium. Les objets à mâcher comestibles de forme conforme à la figure 5 selon l'invention sont obtenus par extrusion. Trois lots d'objets à mâcher comestibles de trois différents formats, dimensions et poids, adaptés à la taille du chien sont obtenus, à savoir :
- chien de petite taille : 100 mm de longueur, 15 mm de largeur, et pesant 9 g,
- chien de taille moyenne : 70 mm de longueur, 28 mm de largeur, et pesant 11 g,
- chien de grande taille: 100 mm de longueur, 28 mm de largeur, et pesant 17 g.

### EXEMPLE 3

Etude relative à l'action de l'objet à mâcher comestible sur l'état d'entartrement et/ou sur la prévention de l'apparition de tartre.

### 1) Mode opératoire

Deux groupes homogènes - ci-après groupes I et II - de 30 chiens chacun, sans restriction de race, d'âge ou de sexe, sont sélectionnés dans une gamme de poids allant de 5 à 35 kg.

Pour cette étude, on a considéré quatre états d'entartrement, dénommés stades 1 à 4 :

| Stades d'entartrement | |
|---|---|
| **STADES** | **ENTARTREMENT** |
| **4** | **très important** |
| **3** | **important** |
| **2** | **moyen** |
| **1** | **faible** |

On prépare par extrusion-moulage en utilisant la matrice décrite dans l'exemple 1, trois lots d'os à mâcher comestibles de forme classique, semblable à celle d'un os long comportant une diaphyse aux extrémités de laquelle se trouvent deux épiphyses, dans trois tailles différentes, dimensions et poids, adaptés à la taille du chien à savoir :
- chien de petite taille : 72 mm de longueur, et pesant 35 g,
- chien de taille moyenne : 100 mm de longueur, et pesant 65 g, et
- chien de grande taille : 110 mm de longueur, et pesant 105 g.

Les chiens du groupe I ont reçu chacun 8 objets à mâcher comestibles de l'objet selon l'invention tel que décrit dans l'exemple 1, par mois. Ceux du groupe Il ont reçu chacun 8 os à mâcher comestibles décrits ci-dessus, par mois.

Différents paramètres, listés ci-dessous, ont été suivis par les propriétaires et par les vétérinaires :
- Paramètres suivis par le propriétaire durant le premier mois du traitement pendant 1 heure chaque fois qu'il donne l'objet à mâcher ou l'os au chien :
   - prise de l'objet ou de l'os par l'animal / pas de prise de l'objet ou de l'os par l'animal,
   - si prise : temps de mastication de l'objet ou de l'os, et
   - consommation totale de l'objet ou de l'os / abandon de l'objet ou de l'os avant la consommation totale.
- Paramètres suivis par le vétérinaire pendant les visites à 15, 30, 45, 60, 75, et 90 jours après l'administration initiale de l'objet ou de l'os :
   - état des gencives,
   - état de la plaque dentaire ainsi que le stade d'entartrement

### 2) Résultats

### a) par les propriétaires

Le tableau 1 ci-après illustre les résultats observés par les propriétaires à la présentation de l'objet selon l'invention ou de l'os à mâcher comestible :

**TABLEAU 1**

| | | Chiens du groupe I | Chiens du groupe II |
|---|---|---|---|
| PRISE DE L'OBJET | OUI | 240/240 | 240/240 |
| | NON | 0/240 | 0/240 |
| TEMPS MOYEN DE MASTICATION | | 8 minutes | 10 minutes |
| CONSOMMATION DE L'OBJET* | OUI | 209/240 | 195/240 |
| | NON | 31/240 | 45/240 |

| | | | |
|---|---|---|---|
| *Si l'objet n'est pas pris par l'animal, il est retiré définitivement au bout d'une heure par le propriétaire. | | | |

### b) par le vétérinaire

Le tableau 2 ci-après illustre les résultats observés aux visites chez le vétérinaire, pendant le traitement.

**TABLEAU 2**

| | | | |
|---|---|---|---|
| | STADES | EXAMEN INITIAL | FIN DE TEST |
| **Chiens du groupe I** | 4 | 20 % | 0 % |
| | 3 | 50 % | 6,66 % |
| | 2 | 20 % | 23,33 % |
| | 1 | 10 % | 70 % |
| | | | |
| **Chiens du groupe II** | 4 | 20 % | 3,33 % |
| | 3 | 50 % | 26,66 % |
| | 2 | 20 % | 43,33 % |
| | 1 | 10 % | 26,66 % |
| | | | |

Les objets à mâcher selon l'invention ou les os de même composition et de dureté équivalente, montrent d'une part une acceptabilité comparable par les animaux quelle que soit la forme, d'autre part ils sont ingérés sensiblement de la même manière (tableau 1).

Les résultats du tableau 2 mettent en évidence une action sur l'état de la dentition des animaux bien meilleure avec l'objet à mâcher selon l'invention, 70% des animaux sont dans le stade 1, alors qu'avec un os de forme conventionnelle de même composition que l'objet à mâcher, 26,6 % des animaux sont dans le stade 1. Ces résultats montrent que la forme de l'objet à mâcher comestible permet d'obtenir de meilleurs résultats grâce à la combinaison des actions physique, mécanique et chimique de l'objet à mâcher.

## Revendications

1. Objet à mâcher pour animaux carnivores de compagnie, cet objet (1) étant de forme allongée et constitué d'une matrice masticable, comestible et digestive, dont la composition contient au moins un élément actif, agent chimique ou biologique possédant soit une activité thérapeutique, curative ou préventive, locale ou systémique, soit une activité anti-tartre, contre les caries, la plaque dentaire, les dépôts calcaires ou encore une activité renforçant la structure dentaire, la teneur de chaque élément actif dans la composition de la matrice étant comprise entre 0,01 et 5 % en poids de la matrice, **caractérisé en ce que** la forme de l'objet (1) présente au moins deux dièdres (d₁, d₂) dont les arêtes (a₁, a₂) s'étendent sensiblement sur toute la longueur de l'objet,

2. Objet à mâcher selon la revendication 1, **caractérisé en ce que** les arêtes (a₁, a₂) des dièdres (d₁, d₂) sont sensiblement rectilignes, concaves ou convexes.

3. Objet à mâcher selon la revendication 1 ou 2, **caractérisé en ce que** les arêtes (a₁, a₂) des dièdres (d₁, d₂) sont de forme arrondie.

4. Objet à mâcher selon l'une des revendications précédentes, **caractérisé en ce que** les dièdres (d₁, d₂) forment un angle (α) compris entre 0,5° et 70°, préférentiellement entre 10° et 50°.

5. Objet à mâcher selon l'une des revendications précédentes, **caractérisé en ce que**, en section droite, l'objet (1) présente une forme polygonale avec n angles saillants (α) pour former n arêtes.

6. Objet à mâcher selon l'une des revendications 1 à 4, **caractérisé en ce qu'**il présente globalement une forme de diabolo avec une partie centrale (3) et deux parties d'extrémité (5) présentant chacune, en section droite, au moins deux angles saillants (α) pour former deux arêtes (a₁, a₂).

7. Objet à mâcher selon l'une des revendications 1 à 4, **caractérisé en ce que**, en section droite, l'objet (1) présente une forme globalement en S avec une partie centrale (3) et deux parties d'extrémité (5) faisant respectivement saillie de part et d'autre de la partie centrale (3), chaque partie d'extrémité présentant, en section droite, au moins deux angles saillants (α) pour former deux arêtes (a₁, a₂).

8. Objet à mâcher selon l'une des revendications 1 à 4, **caractérisé en ce que**, en section droite, l'objet (1) présente globalement une forme en V définie par deux dièdres (d₁, d₂) pour former trois arêtes (a₁, a₂, a₃).

9. Objet à mâcher selon l'une des revendications 1 à 4, **caractérisé en ce que**, en section droite, l'objet (1) présente globalement une forme en W définie par au moins quatre dièdres (d₁, d₂, d₃, d₄) pour former au moins cinq arêtes (a₁, a₂, a₃, a₄, a₅).

10. Objet à mâcher selon l'une des revendications 1 à 4, **caractérisé en ce que**, en section droite, l'objet (1) présente globalement une forme en losange avec deux angles saillants (α) pour former deux arêtes (a1, a2).

11. Objet à mâcher selon l'une des précédentes revendications, **caractérisé en ce que** la teneur en éléments d'actifs ne dépassent pas 10% en poids.

12. Objet à mâcher selon l'une des revendications précédentes, **caractérisé en ce que** la composition de la matrice contient de 2 à 5 éléments actifs.

13. Objet à mâcher comestible selon l'une des revendications précédentes, **caractérisé en ce que** le ou les éléments actifs sont choisis parmi les sels fluorés comme le fluorure de sodium, le monofluorate de sodium, le fluorure d'étain, seul ou en mélange, les pyrophosphate inorganiques de métaux alcalins mono ou divalent (Na, K, Li, Ca, Mg, etc...) de formules Mₙ₊₂PₙO₃ₙ₊₁ où M est un métal monovalent ou M'ₙPₙO₃ₙ₊₁ où M' est un métal divalent comme le pyrophosphate tétrasodique, le pyrophosphate tétrapotassique, le pyrophosphate acide de sodium, le pyrophosphate de calcium, les antimicrobiens et /ou antifongiques et/ou antiseptiques comme la chlorhexidine ou ses sels, le bromochlorophène, le triclosan, le chlorure de benzalkonium, le chlorobutanol, le chlorure de cétylpyridinium, les sels de l'acide benzoïque comme le benzoate de sodium, le digluconate de zinc, le thiocyanate de potassium, la vitamine C et ses sels en particulier l'ascorbate de zinc, l'acide citrique et ses sels, les oxydoréductases comme la glucose oxydase, la galacto oxydase, la lactoperoxydase, le glycollate oxydase, la lactate oxydase, L-gluconolactone oxydase, L-2hydroxyacide oxydase, aldehyde oxydase, xanthine oxydase, D-aspartate oxydase, L-amino acide oxydase, D-amino acide oxydase, monoamine oxydase, pyridoxaminephosphate oxydase, diamine oxydase, sulfite oxydase, à chacune de ces oxydoréductases peut être associée un substrat spécifique comme le glucose pour la glucose oxydase, comme substrats le D-glucose, D-galactose, L-sorbose, éthanol, tyramine, 1,4-diaminobutane, 6-hydroxy-L-nicotine, 6-hydroxy-D-nicotine, 2-aminophénol, glycollate, L-lactate, 2-deoxy-D-Glucose, L-gluconolactone, L-galactolactone, D-mannonolactone, L-2hydroxyisocaproate, acétaldéhyde, butyraldéhyde, xanthine, D-aspartate, D-glutamate, L-aminoacides et D-aminoacides, des enzymes comme la lysozyme, la lactoferrine, les reminéralisants, les substances de blanchiment des dents comme le TC45/Bioglass^{®}, les polysaccharides naturels ou modifiés comme la chitine, le chitosan et ses dérivés.

14. Objet à mâcher selon l'une des revendications précédentes, **caractérisé en ce que** la composition de la matrice contient au moins un agent abrasif.

15. Objet à mâcher comestible selon la revendication 14, **caractérisé en ce que** l'agent abrasif est choisi parmi les dérivés de la silice comme la silice hydratée, silicate de zirconium, silicate d'aluminium, ou trisilicate de magnésium ; le carbonate de calcium ; le bicarbonate de sodium ; les dérivés du phosphate comme le dihydrogénophosphate de calcium (Ca(H₂PO₄)₂), le monohydrogénophosphate de calcium (CaHPO₄), le phosphate de magnésium-ammonium (MgNH₄PO₄) ou le pyrophosphate de calcium (Ca₂P₂O₇); une alumine comme le trihydrate d'alumine ; de la poudre de pierre ponce, des calcaires marins finement broyés, de la poudre d'os.

16. Objet à mâcher comestible selon l'une des revendications précédentes, **caractérisé en ce que** la composition de la matrice contient au moins un arôme et /ou au moins un agent de saveur, et /ou au moins un agent humectant, et/ou au moins un agent conservateur.

17. Objet à mâcher comestible selon l'une des revendications précédentes, **caractérisé en ce qu'**il est fabriqué par extrusion ou par moulage ou par extrusion-moulage.

18. Utilisation d'un objet à mâcher selon l'une des revendications précédentes pour la prévention et/ou le traitement des gingivites et/ou des parodontites des animaux domestiques.

19. Utilisation d'un objet à mâcher selon l'une des revendications précédentes pour la prévention et/ou le traitement des dépôts de tartre dans la cavité buccale des animaux domestiques.

20. Méthode pour assurer l'hygiène de la cavité buccale et des dents d'un animal carnivore de compagnie, au moyen d'un objet à mâcher, selon l'une des revendications 1 à 17, dans laquelle sont mis en contact avec les dents de l'animal des éléments actifs contenus dans la matrice de l'objet, méthode qui est **caractérisée en ce qu'**elle consiste :
- dans une première étape : à favoriser le contact entre l'objet et les dents de l'animal grâce à la présence d'arêtes qui s'étendent sensiblement sur toute la longueur de l'objet et à la présence de composants ou d'agents abrasifs contenus dans la matrice de l'objet, pour assurer un nettoyage mécanique des dents de l'animal aussi bien au niveau des surfaces que des interstices et/ou cavités ;
- dans une deuxième étape : à mettre en contact avec les dents nettoyées des éléments actifs contenus dans la matrice de l'objet ;
- dans une troisième étape : à provoquer en premier lieu après hydratation de l'objet par la salive de l'animal un ramollissement des arêtes de l'objet qui joue alors le rôle d'une raclette à bavette souple ; et
- dans une quatrième étape : par l'action conjointe du mâchonnement de l'objet qui provoque son fractionnement et de la présence d'une salive abondante, à libérer l'ensemble des éléments actifs pour les mettre en contact avec l'ensemble de la cavité buccale de l'animal.

## Claims

1. Chewable object for carnivorous pets, this object (1) having an elongated form and comprising a masticable matrix that can be eaten and digested, of which the composition contains at least one active constituent, chemical or biological agent having either a therapeutic, curative or preventive activity, local or systemic, or an anti-tartar activity protecting against caries, dental plaque, calcareous deposits, or an activity reinforcing the dental structure, wherein the content of each active constituent in the composition of the matrix is between 0.01 and 5% by weight of the matrix, **characterised in that** in its shape the object (1) has at least two dihedrons (d₁, d₂) of which the edges (a₁, a₂) extend essentially over the whole length of the object.

2. Chewable object according to claim 1, **characterised in that** the edges (a₁, a₂) of the dihedrons (d₁, d₂) are essentially rectilinear, concave or convex.

3. Chewable object according to claim 1 or 2, **characterised in that** the edges (a₁, a₂) of the dihedrons (d₁, d₂) are rounded.

4. Chewable object according to one of the preceding claims, **characterised in that** the dihedrons (d₁, d₂) form an angle (α) of between 0.5° and 70°, preferably between 10° and 50°.

5. Chewable object according to one of the preceding claims, **characterised in that** the object (1) has a polygonal cross-section with n salient angles (α) to form n edges.

6. Chewable object according to one of the claims 1 to 4, **characterised in that** it has the overall shape of a diabolo with a central section (3) and two end sections (5), each having in cross-section at least two salient angles (α) to form two edges (a₁, a₂)

7. Chewable object according to one of the claims 1 to 4, **characterised in that** the object (1) has an S-shaped cross-section, with a central section (3) and two end sections (5) respectively projecting on either side of the central section (3), each end section having, in cross-section, at least two salient angles (α) to form two edges (a₁, a₂).

8. Chewable object according to one of the claims 1 to 4, **characterised in that** the object (1) has a V-shaped cross-section, defined by two dihedrons (d₁, d₂) to form three edges (a₁, a₂, a₃).

9. Chewable object according to one of the claims 1 to 4, **characterised in that** the object (1) has a W-shaped cross-section, defined by at least four dihedrons (d₁, d₂, d₃, d₄) to form at least five edges (a₁, a₂, a₃, a₄, a₅).

10. Chewable object according to one of the claims 1 to 4, **characterised in that** the object (1) has a lozenge-shaped cross-section with two salient angles (α) to form two edges (a₁, a₂).

11. Chewable object according to one of the preceding claims, **characterised in that** the content of active constituents does not exceed 10% by weight.

12. Chewable object according to one of the preceding claims, **characterised in that** the composition of the matrix contains 2 to 5 active constituents.

13. Chewable object according to one of the preceding claims, **characterised in that** the active constituent(s) is / are chosen from among fluorine salts such as sodium fluoride, sodium monofluorate, tin fluoride, individually or mixed, inorganic pyrophosphates of mono or divalent alkaline metals (Na, K, Li, Ca, Mg, etc.) of formulae Mₙ₊₂PₙO₃ₙ₊₁, where M is a monovalent metal, or M'ₙPₙO₃ₙ₊₁, where M is a divalent metal such as tetrasodium pyrophosphate, tetrapotassium pyrophosphate, sodium acid pyrophosphate, calcium pyrophosphate, anti-microbials and / or anti-fungals and / or antiseptics such as chlorhexidine or its salts, bromochlorophene, triclosan, benzalkonium chloride, chlorobutanol, cetylpyridinium chloride, benzoic acid salts such as sodium benzoate, zinc digluconate, potassium thiocyanate, vitamin C and its salts and particularly zinc ascorbate, citric acid and its salts, oxidoreductases such as glucose oxidase, galacto oxidase, lactoperoxidase, glycollate oxidase, lactate oxidase, L-gluconolactone oxidase, L-2hydroxyacide oxidase, aldehyde oxidase, xanthine oxidase, D-aspartate oxidase, L-amino acid oxidase, D-amino acid oxidase, monoamine oxidase, pyridoxaminephosphate oxidase, diamine oxidase, sulphite oxidase, and each of these oxidoreductases may be associated with a specific substrate such as glucose for glucose oxidase, substrates D-glucose, D-galactose, L-sorbose, ethanol, tyramine, 1,4-diaminobutane, 6-hydroxyL-nicotine, 6-hydroxy-D-nicotine, 2-aminophenol, glycollate, L-lactate, 2-deoxy-D-glucose, L-gluconolactone, L-galactolactone, D-mannonolactone, L-2hydroxyisocaproate, acetaldehyde, butyraldehyde, xanthine, D-aspartate, D-glutamate, L-aminoacids and D-aminoacids, enzymes such as lysozyme, lactoferrine, remineralising agents, tooth bleaching substances such as TC45/Bioglass®, natural or modified polysaccharides such as chitin, chitosan and its derivatives.

14. Chewable object according to one of the preceding claims, **characterised in that** the composition of the matrix contains at least one abrasive agent.

15. Chewable, edible object according to claim 14, **characterised in that** the abrasive agent is chosen from among silica derivatives such as hydrated silica, zirconium silicate, aluminium silicate or magnesium trisilicate; calcium carbonate; sodium bicarbonate; phosphate derivatives such as calcium dihydrogen phosphate (Ca(H₂PO₄)₂), calcium monohydrogen phosphate (CaHPO₄) magnesium-ammonium phosphate (MgNH₄PO₄) or calcium pyrophosphate (Ca₂P₂O₇); an alumina such as alumina trihydrate; pumice stone powder, finely ground marine limestone, bone powder.

16. Edible, chewable object according to one of the preceding claims, **characterised in that** the composition of the matrix contains at least one flavour and / or at least one tasting agent and / or at least one wetting agent and / or at least one preserving agent.

17. Edible, chewable object according to one of the preceding claims, **characterised in that** it is produced by extrusion or by moulding or by extrusion moulding.

18. Use of a chewable object according to one of the preceding claims for the prevention and / or treatment of gingivitis and / or parodontitis in domestic animals.

19. Use of a chewable object according to one of the preceding claims for prevention and / or treatment of tartar deposits in the oral cavity of domestic animals.

20. Method for ensuring the hygiene of the oral cavity and teeth of carnivorous pets using a chewable object according to one of the claims 1 to 17, in which the teeth of the animal are brought into contact with the active constituents contained in the matrix of the object, a method **characterised in that** it comprises:
- in a first step, improving the contact between the object and the teeth of the animal through the presence of edges which extend essentially over the entire length of the object and the presence of abrasive agents or components contained in the matrix of the object in order to ensure mechanical cleaning of the teeth of the animal both on the surfaces and in the gaps and / or cavities;
- in a second step, bringing the cleaned teeth into contact with the active constituents contained in the matrix of the object;
- in a third step, firstly causing, after hydration of the object through the saliva of the animal, the softening of the edges of the object which then acts as a scraper with a flexible skirt; and
- in a fourth step, through the combined action of chewing of the object which causes it to be broken up and the presence of abundant saliva, releasing all the active constituents so that they are brought into contact with the whole of the oral cavity of the animal.

## Patentansprüche

1. Kaugegenstand für fleischfressende Haustiere, wobei der Gegenstand (1) eine längliche Form hat und aus einer kaubaren, fressbaren und verdauungsfördernden Matrix besteht, deren Zusammensetzung wenigstens einen wirksamen Bestandteil enthält, der ein chemisches oder biologisches Mittel mit entweder einer lokalen oder systemischen therapeutischen, heilenden oder vorbeugenden Wirkung ist oder einer Wirkung gegen Zahnstein, Karies, Zahnbelag, Kalkablagerungen oder auch einer die Zahnstruktur stärkenden Wirkung, wobei der Gehalt von jedem wirksamen Bestandteil in der Zusammensetzung der Matrix zwischen 0,01 und 5 Gew.-% der Matrix liegt, **dadurch gekennzeichnet, dass** die Form des Gegenstands (1) wenigstens zwei Dieder (d₁, d₂) beinhaltet, deren Kanten (a₁, a₂) sich in etwa über die gesamte Länge des Gegenstands erstrecken.

2. Kaugegenstand nach Anspruch 1, **dadurch gekennzeichnet, dass** die Kanten (a₁, a₂) der Dieder (d₁, d₂) in etwa geradlinig, konkav oder konvex sind.

3. Kaugegenstand nach Anspruch 1 oder 2, **dadurch gekennzeichnet, dass** die Kanten (a₁, a₂) der Dieder (d₁, d₂) abgerundet sind.

4. Kaugegenstand nach einem der vorhergehenden Ansprüche, **dadurch gekennzeichnet, dass** die Dieder (d₁, d₂) einen Winkel (α) zwischen 0,5° und 70°, vorzugsweise zwischen 10° und 50° bilden.

5. Kaugegenstand nach einem der vorhergehenden Ansprüche, **dadurch gekennzeichnet, dass** der Gegenstand (1) einen Querschnitt polygonaler Form mit n vorspringenden Winkeln (α) zur Bildung von n Kanten aufweist.

6. Kaugegenstand nach einem der Ansprüche 1 bis 4, **dadurch gekennzeichnet, dass** er im Wesentlichen eine Diaboloform mit einem zentralen Teil (3) und zwei Endteilen (5) aufweist, von denen jeder einen Querschnitt mit wenigstens zwei vorspringenden Winkeln (α) zur Bildung von zwei Kanten (a₁, a₂) aufweist.

7. Kaugegenstand nach einem der Ansprüche 1 bis 4, **dadurch gekennzeichnet, dass** der Gegenstand (1) einen im Wesentlichen S-förmigen Querschnitt mit einem zentralen Teil (3) und zwei Endteilen (5) aufweist, die an beiden Seiten des zentralen Teils (3) einen Vorsprung bilden, wobei jeder Endteil einen Querschnitt mit wenigstens zwei vorspringende Winkel (α) zur Bildung von zwei Kanten (a₁, a₂) aufweist.

8. Kaugegenstand nach einem der Ansprüche 1 bis 4, **dadurch gekennzeichnet, dass** der Gegenstand (1) einen im Wesentlichen V-förmigen Querschnitt aufweist, der durch zwei Dieder (d₁, d₂ d₃, d₄) zur Bildung von drei Kanten (a₁, a₂, a₃) definiert ist.

9. Kaugegenstand nach einem der Ansprüche 1 bis 4, **dadurch gekennzeichnet, dass** der Gegenstand (1) einen im Wesentlichen W-förmigen Querschnitt aufweist, der durch wenigstens vier Dieder (d₁, d₂ d₃, d₄) zur Bildung von wenigstens fünf Kanten (a₁, a₂, a₃, a₄, a₅) definiert ist.

10. Kaugegenstand nach einem der Ansprüche 1 bis 4, **dadurch gekennzeichnet, dass** der Gegenstand (1) einen im Wesentlichen rautenförmigen Querschnitt mit zwei vorspringenden Winkeln (α) zur Bildung von zwei Kanten (a₁, a₂) aufweist.

11. Kaugegenstand nach einem der vorhergehenden Ansprüche, **dadurch gekennzeichnet, dass** der Gehalt an wirksamen Bestandteilen 10 Gew.-% nicht übersteigt.

12. Kaugegenstand nach einem der vorhergehenden Ansprüche, **dadurch gekennzeichnet, dass** die Zusammensetzung der Matrix 2 bis 5 wirksame Bestandteile enthält.

13. Fressbarer Kaugegenstand nach einem der vorhergehenden Ansprüche, **dadurch gekennzeichnet, dass** der oder die wirksamen Bestandteile ausgewählt sind aus Fluorsalzen, wie Natriumfluorid, Natriummonofluorat, Zinnfluorid, allein oder in Mischung, anorganischen Pyrophosphaten von ein- oder zweiwertigen Alkalimetallen (Na, K, Li, Ca, Mg usw.) der Formel Mₙ₊₂PₙO₃ₙ₊₁, worin M ein einwertiges Metall ist, oder M'ₙPₙO₃ₙ₊₁, worin M' ein zweiwertiges Metall ist, wie Tetranatriumpyrophosphat, Tetrakaliumpyrophosphat, saures Natriumpyrophosphat, Calciumpyrophosphat, antimikrobiellen und/oder antimykotischen und/oder antiseptischen Mitteln wie Chlorhexidin oder seinen Salzen, Bromchlorophen, Triclosan, Benzalkoniumchlorid, Chlorbutanol, Cetylpyridiniumchlorid, Benzoesäuresalzen wie Natriumbenzoat, Zinkdigluconat, Kaliumthiocyanat, Vitamin C und seinen Salzen, insbesondere Zinkascorbat, Zitronensäure und ihren Salzen, Oxidoreduktasen wie Glucose-Oxidase, Galactose-Oxidase, Lactoperoxidase, Glycolat-Oxidase, Lactat-Oxidase, L-Gluconolacton-Oxidase, L-2-Hydroxysäure-Oxidase, Aldehyd-Oxidase, Xanthin-Oxidase, D-Aspartat-Oxidase, L-Aminosäure-Oxidase, D-Aminosäure-Oxidase, Monoamin-Oxidase, Pyridoxaminphosphat-Oxidase, Diamin-Oxidase und Sulfit-Oxidase, wobei jede dieser Oxidoreduktasen mit einem spezifischen Substrat wie Glucose für Glucose-Oxidase assoziiert sein kann, wie D-Glucose, D-Galactose, L-Sorbose, Ethanol, Tyramin, 1,4-Diaminobutan, 6-HydroxyL-nikotin, 6-Hydroxy-D-nikotin, 2-Aminophenol, Glykolat, L-Lactat, 2-Desoxy-D-Glucose, L-Gluconolacton, L-Galactonolacton, D-Mannonolacton, L-2-Hydroxyisocaproat, Acetaldehyd, Butyraldehyd, Xanthin, D-Aspartat, D-Glutamat, L-Aminosäuren und D-Aminosäuren, Enzymen wie Lysozym, Lactoferrin, Remineralisierungsmitteln, Zahnbleichmitteln wie TC45/Bioglass^{®}, und natürlichen oder modifizierten Polysacchariden wie Chitin, Chitosan und ihren Derivaten.

14. Kaugegenstand nach einem der vorhergehenden Ansprüche, **dadurch gekennzeichnet, dass** die Zusammensetzung der Matrix wenigstens ein Schleifmittel enthält.

15. Fressbarer Kaugegenstand nach Anspruch 14, **dadurch gekennzeichnet, dass** das Schleifmittel ausgewählt ist aus Siliciumdioxidderivaten, wie Kieselsäuregel, Zirkonsilikat, Aluminiumsilikat oder Magnesiumtrisilikat; Calciumcarbonat; Natriumbicarbonat; Phosphatderivaten wie Calciumdihydrogenphosphat (Ca(H₂PO₄)₂), Calciummonohydrogenphosphat (CaHPO₄), Magnesiumammoniumphosphat (MgNH₄PO₄), oder Calciumpyrophosphat (Ca₂P₂O₇); einem Aluminiumoxid wie Aluminiumoxid-Trihydrat; Bimsmehl; fein gemahlenem Meereskalkstein, und Knochenmehl.

16. Fressbarer Kaugegenstand nach einem der vorhergehenden Ansprüche, **dadurch gekennzeichnet, dass** die Zusammensetzung der Matrix wenigstens einen Aromastoff und/oder wenigstens einen Geschmacksstoff und/oder wenigstens ein Netzmittel und/oder wenigstens ein Konservierungsmittel enthält.

17. Fressbarer Kaugegenstand nach einem der vorhergehenden Ansprüche, **dadurch gekennzeichnet, dass** er durch Extrusion oder durch Formpressen oder durch Strangpressen hergestellt ist.

18. Verwendung eines Kaugegenstands nach einem der vorhergehenden Ansprüche zur Vorbeugung und/oder Behandlung von Gingivitis und/oder Paradontitis von Haustieren.

19. Verwendung eines Kaugegenstands nach einem der vorhergehenden Ansprüche zur Vorbeugung und/oder Behandlung von Zahnsteinablagerungen in der Mundhöhle von Haustieren.

20. Verfahren zum Sicherstellen der Hygiene von Mundhöhle und Zähnen eines fleischfressenden Haustiers mittels eines Kaugegenstands nach einem der Ansprüche 1 bis 17, bei dem wirksame Bestandteile, die in der Matrix des Gegenstands enthalten sind, mit den Zähnen des Tiers in Kontakt gebracht werden, wobei das Verfahren **dadurch gekennzeichnet ist, dass** es besteht aus:
- in einem ersten Schritt: Fördern des Kontakts zwischen dem Gegenstand und den Zähnen des Tiers auf Grund der Anwesenheit von Kanten, die sich in etwa über die gesamte Länge des Gegenstands erstrecken, und der Gegenwart von Komponenten oder Schleifmitteln, die in der Matrix des Gegenstands enthalten sind, zum Sicherstellen einer mechanischen Reinigung der Zähne des Tiers sowohl an den Oberflächen als auch in den Zwischenräumen und/oder Kavitäten;
- in einem zweiten Schritt: in Kontakt Bringen der wirksamen Bestandteile, die in der Matrix des Gegenstands enthalten sind, mit den gereinigten Zähnen;
- in einem dritten Schritt: zuerst Hervorrufen einer Erweichung der Kanten des Gegenstands nach Hydratation des Gegenstands durch den Speichel des Tiers, der dann als Schaber mit flexibler Schürze fungiert; und
- in einem vierten Schritt: Freisetzen der gesamten wirksamen Bestandteile, um sie mit der ganzen Mundhöhle des Tiers in Kontakt zu bringen, durch Zusammenwirken des Kauens des Gegenstands, das zu seiner Spaltung in Bruchstücke führt, und der Gegenwart von reichlich Speichel.
